Europäisches Patentamt

European Patent Office

Office européen des brevets

(11) Publication number: **0 246 620 B1**

# EUROPEAN PATENT SPECIFICATION

(45) Date of publication of patent specification: **26.02.92**  (51) Int. Cl.[5]: **B29C 67/14**

(21) Application number: **87107281.5**

(22) Date of filing: **19.05.87**

(54) **Glass-fiber reinforced resin molded articles and a method for producing the same.**

(30) Priority: **19.05.86 JP 112498/86**

(43) Date of publication of application:
**25.11.87 Bulletin 87/48**

(45) Publication of the grant of the patent:
**26.02.92 Bulletin 92/09**

(84) Designated Contracting States:
**BE DE FR GB**

(56) References cited:
**GB-A- 2 084 977**
**US-A- 4 080 233**
**US-A- 4 698 083**

(73) Proprietor: **NITTO BOSEKI CO., LTD.**
**1 Aza Higashi Gonome**
**Fukushima-shi Fukushima-ken(JP)**

(72) Inventor: **Koike, Ryozo**
**42-34 Horaicho**
**Fukushima-shi(JP)**
Inventor: **Shioura, Kozo**
**44-45 Horaicho**
**Fukushima-shi(JP)**
Inventor: **Shimanuki, Seiichi**
**9-2, Aza Onigoe**
**Iizakamachi Fukushima-shi(JP)**

(74) Representative: **Hansen, Bernd, Dr.rer.nat. et al**
**Hoffmann, Eitle & Partner Patentanwälte Arabellastrasse 4 Postfach 81 04 20**
**W-8000 München 81(DE)**

EP 0 246 620 B1

**Description**

BACKGROUND OF THE INVENTION

This invention relates to a glass-fiber reinforced thermoplastic resin molded article and more particularly to a glass-fiber reinforced resin molded article having high glass fiber content and a high strength.

Hitherto, molded articles have been known which comprises a thermoplastic resin reinforced with glass fibers. Generally, such thermoplastic resin molded articles have been produced by injection molding pellets containing glass fibers. It is also known to produce them by directly injection molding a resin and glass fibers mixed in a hopper. The glass fibers used have circular cross-section.

Mechanical strengths (tensile strength, flexural strength, etc.) of such molded articles vary depending on content of reinforcing fibers, length of fibers, degree of orientation and bonding strength between reinforcing fibers and resin and are increased especially by increasing the content of reinforcing fibers. However, when content of glass fibers is increased to about 40%, mechanical strengths reach saturation points and in some case, even if content is further increased, strengths are no longer increased and rather tend to decrease. Thus, there is the problem that there is a limitation in GB-A-2084977 discloses a composite material including reinforcing fibers embedded in an organic resin matrix. The object of the invention of this document is to improve the packing density of high-strength, high modulus reinforcement fibers, and this is achieved by using fibers having a cross-sectional shape which is or approximates to a flat-sided polygon of three or more sides.

As a result of the inventors' intensive researches on causes for the above problem, the following have been found. That is, length of fibers in molded articles is far shorter than that of fibers incorporated initially by kneading at melt extrusion for preparation of pellets containing glass fibers or at injection molding. This fiber length is influenced by content of glass fibers and with increase of the content, the fiber length becomes shorter thereby reducing reinforcing effects. On the other hand, bonding strength between glass fibers and resin also decreases with increase of content of fibers. This also causes reduction of reinforcing effects. It is considered that for these reasons the saturation phenomenon of reinforcing effects occurs at high content of the glass fibers.

Therefore, it is considered that reinforcing effects can be increased by employing longer fiber length and by increasing the bonding strength between glass fibers and resin. However, even if merely longer fibers are incorporated, these fibers are broken at melt extrusion or injection molding to become shorter and thus it is impossible to contain fibers of longer length in molded articles. Furthermore, bonding strength between glass fibers and resin may be increased by improving surface treating agent applied to the surface of fibers, but at present there is a limitation in improvement of the surface treating agent. Therefore, there is limitation in increasing the reinforcing effects by increasing fiber content.

SUMMARY OF THE INVENTION

Accordingly, the object of this invention is to provide a glass fiber reinforced resin molded article which is higher in reinforcing effect of glass fibers and in mechanical strength due to higher glass fiber content than those of conventional glass fiber reinforced resin molded articles.

BRIEF EXPLANATION OF DRAWINGS

Fig. 1, (1-1), (1-2) and (1-3) are cross-sectional views of some examples of glass fibers used in the glass fiber reinforced resin molded articles of this invention.

Fig. 2, (2-1) and (2-2) are graphs which show distribution of length of glass fibers having circular cross-section (2-1) and graphs having cocoon-like cross-section of glass fibers which were measured in Example 1 given hereinafter.

DESCRIPTION OF THE INVENTION

As a result of the inventors' intensive researches, it has been found that a molded article increased in reinforcing effects and higher in strength even at high fiber content owing to the reinforcing effects than conventional articles can be obtained by using glass fibers having non-circular cross-section of oblong shape in place of the conventional glass fibers of circular cross-section as a reinforcement. Thus, this invention has been accomplished.

That is, according to one aspect, this invention provides a glass-fiber reinforced rein molded article which comprises a resin reinforced with glass fibers,

characterised in that the resin is thermoplastic and the glass fibers have an oblong cross-section, elliptic cross-section or cocoon-shaped cross-section.

In this invention, glass fibers having elongated non-circular cross-section are incorporated in the form of chopped strands of a certain length into a thermoplastic resin and kneaded in an extruder whereby the chopped strands of glass fibers become filament-like and uniformly dispersed in the thermoplastic resin. This kneaded product is pelletized by extrusion molding and the pellets are molded by injection molding machine, etc. to obtain the desired molded article. Further, the desired article can also be used by direct molding without preparing the pellets from the extruder and it is possible to obtain the molded article by one step by introducing chopped strands of glass fiber having non-circular cross-section and thermoplastic resin in injection molding machine.

Glass fiber content is the amount of the glass fibers from 10% to 70% by weight, preferably from 20% to 60% by weight of a glass-fiber reinforced resin molded article. Where glass fiber content is lower than 10% by weight, desired effects may not be obtained in comparison with the use of glass fiber having circular cross-section. Where glass fiber content is more than 70% by weight, the kneading may not be sufficiently carried out in an extruder, whereby difficulties are encountered, for example, undesirable voids are incorporated in the glass-fiber reinforced resin molded article and thereby the glass-fibers for the reinforced material are not uniformly suspended.

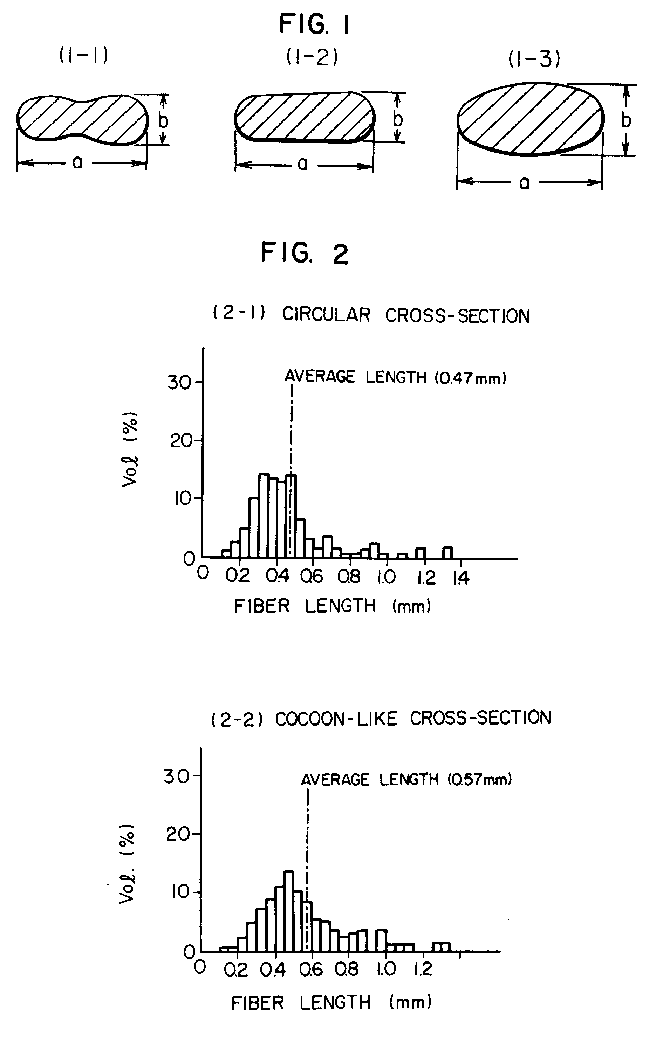

As glass fibers having elongated non-circular cross-section used in this invention, there may be used those having cross-sections of such as cocoon-like shape, oblong shape, elliptic shape, etc. as shown in Fig. 1 (1-1), (1-2) and (1-3). Slenderness ratio of these cross-section (a:b in (1-1), (1-2) and (1-3) of Fig. 1) is within the range of 1.5:1 - 6:1, more preferably 2.5:1 - 4:1. When this slenderness ratio is less than 1.5:1, i.e., the cross-section is close to circle, the effect of flattening the cross-section is small and when more than 6:1, the fibers become too flattened and becomes fragile, resulting in reduction of strength. Such glass fibers having non-circular cross-section can be produced by the methods developed by the applicant and disclosed in Japanese Patent Application Nos. 10800/85, 57534/85 and 57536/85.

The thermoplastic resins usable in this invention include those which can be extrusion molded and/or injection molded, for example, PP (Polypropylene), AS (Acrylonitrile-styrene), ABS (Acrylonitrile-butadienestyrene), PBT (Polybutylene terephthalate), PET (Polyethylene terephthalate), PA (Polyamide), PC (Polycarbonate), POM (Polyacetal), PPO (Polyphenylene oxide), PPS (Polyphenylene sulphide), PES (Polyethersulphone), PEEK (Polyetheretherketone), etc.

When chopped strands comprising glass fibers having elongated non-circular cross-section are used as reinforcements for thermoplastic resins, specific surface area is increased as compared with when glass fibers having circular cross-section are used thereby resulting in increase of effect of bonding to the matrix resin. Thus, reinforcing effect is increased and various mechanical strengths are improved as compared with the conventional glass fibers of circular cross-section at the same fiber content and besides high strengths can be obtained by increasing the fiber content. Furthermore, when glass fibers having elongated non-circular cross-section are used as a reinforcing material for glass-fiber reinforced thermoplastic resin molded articles, length of fibers in the molded articles becomes longer than when glass fibers having circular cross-section are used, though the reason is unknown. This is also considered to increase mechanical strength of molded articles.

The following nonlimiting examples illustrate this invention.

Example I

Chopped strands (slenderness ratio a:b = 3:1, filament tex 338 mg/1000 m, corresponding to diameter 13 $\mu$ as circular cross-section and length 3 mm) of glass fibers having cocoon-shaped cross-section [as shown in Fig. 1 (1-1)] as the elongated non-circular cross-section and PBT (PBT1401-X06 manufactured by Toray Industries, Inc.) as a thermoplastic resin were melt-kneaded by single-screw extruder to produce pellets of various blending ratios. These pellets were molded into dumbbells and square bars by an injection molding machine (FS-75 manufactured by Nissei Resin Co.) at a molding temperature of 270°C and a mold temperature of 90°C. Tensile strength of the dumbbells and flexural strength and flexural modulus were measured by Instron tester (DDS-2000 manufactured by Shimazu Seisakusho Co. Ltd.). The results are shown in Table 1.

For comparison, sampels were prepared in the same manner as above, except that chopped strands of ordinary glass fibers having circular cross-section (CS3 PE-941, filament tex 338 mg/1000 m, diameter: 13 $\mu$ and length: 3 mm manufactured by Nitto Boseki Co. Ltd.) were used. Tensile strength, flexural strength and flexural modulus of these samples were measured in the same manner as above. The results are also shown in Table 1.

Glass fibers were taken out from rupture section of the dumbbells of 30% in glass fiber content of glass fibers having circular cross-section and cocoon-shaped cross-section, respectively and length of these glass fibers was measured and the results are shown in Fig. 2 (2-1) and (2-2) which show fiber length distribution of glass fibers having circular cross-section and that of glass fibers having cocoon-shaped cross-section, respectively.

As is clear from the above results, when molded articles were produced using ordinary glass fibers of circular cross-section as reinforcing materials, the molded articles had a saturation point of mechanical strength at a glass fiber content of 40-50% and when the fiber content exceeded this range, strengths abruptly reduced. On the other hand, when glass fibers of cocoon-shaped cross-section were used, saturation points of the mechanical strength rose to 50-60% (fiber content) and furthermore, there is the tendency that absolute values of mechanical strengths increased as compared with when glass fibers of circular cross-section were used. This tendency is especially conspicuous when the glass fiber content was in the range of 50-60%. When the fiber length of glass fibers of circular cross-section in the molded articles was compared with that of cocoon-shaped cross-section in the molded articles, average fiber length of glass fibers having circular cross-section was 0.47 mm while that of fibers having cocoon-shaped cross-section was 0.57 mm. Thus, glass fibers of cocoon-shaped cross-section were longer by about 20% in average fiber length. This is considered to be one reason for the higher mechanical strengths being obtained when glass fibers of cocoon-shaped cross-section are used, in addition to the larger specific surface area obtained when glass fibers of cocoon-shaped cross-section are used than when glass fibers of circular cross-section are used.

## Table 1

| | Tensile strength (kg/cm$^2$) | | | | |
|---|---|---|---|---|---|
| Content ⟍ Cross-section | 20% | 30% | 40% | 50% | 60% |
| Circle | 1320 | 1512 | 1576 | 1718 | 1500 |
| Cocoon shape | 1292 | 1560 | 1680 | 1756 | 1763 |
| | Flexural strength (kg/cm$^2$) | | | | |
| Circle | 2153 | 2429 | 2619 | 2816 | 2477 |
| Cocoon shape | 2134 | 2521 | 2688 | 2978 | 2887 |
| | Flexural modulus ($10^3$kg/cm$^2$) | | | | |
| Circle | 88.3 | 106.0 | 136.8 | 169.2 | 167.6 |
| Cocoon shape | 83.7 | 104.2 | 133.5 | 164.9 | 207.5 |
| | Impact strength (kg-cm/cm) (IZOT notched) | | | | |
| Circle | 9.7 | 12.1 | 12.2 | 11.8 | 8.9 |
| Cocoon shape | 9.7 | 13.8 | 14.9 | 15.8 | 14.0 |
| | Impact strength (kg-cm/cm) (IZOT unnotched) | | | | |
| Circle | 47.8 | 64.6 | 78.0 | 66.9 | 47.1 |
| Cocoon shape | 46.4 | 74.8 | 78.0 | 77.7 | 65.4 |

Example II

Samples were prepared in the same manner as in Example I, except that AS resin (SANREX SAN-C manufactured by Mitsubishi Monsanto Chemical Co. Ltd.) was used as a thermoplastic resin and molding temperature of 260°C and mold temperature of 65°C were employed. Mechanical strengths of thus obtained molded articles were measured. For comparison, molded articles were produced in the same manner as above, except that chopped strands of glass fibers having circular cross-section (CS-3PE-330, diameter: 13 $\mu$ and length: 3 mm, manufactured by Nitto Boseki Co. Ltd.) were employed and mechanical strengths of these articles were also measured. The results are shown in Table 2.

As is clear from Table 2, in this Example, too, when glass fibers having cocoon-shaped cross-section were used, saturation points of mechanical strength shifted to higher glass fiber content side than when those of circular cross-section were used and besides, absolute values of the strength were also increased.

## Table 2

| | Tensile strength (kg/cm$^2$) | | | | |
|---|---|---|---|---|---|
| Content<br>Cross-<br>section | 20% | 30% | 40% | 50% | 60% |
| Circle | 1155 | 1167 | 1154 | 1098 | 976 |
| Cocoon shape | 1105 | 1203 | 1251 | 1248 | 1180 |
| Flexural strength (kg/cm$^2$) | | | | | |
| Circle | 1620 | 1714 | 1731 | 1705 | 1623 |
| Cocoon shape | 1601 | 1721 | 1790 | 1782 | 1665 |
| Flexural modulus (10$^3$kg/cm$^2$) | | | | | |
| Circle | 84.1 | 103.4 | 124.1 | 138.5 | 140.1 |
| Cocoon shape | 84.1 | 107.5 | 126.3 | 147.4 | 155.0 |
| Impact strength (kg-cm/cm)<br>(IZOT notched) | | | | | |
| Circle | 7.4 | 8.5 | 10.2 | 10.3 | 8.8 |
| Cocoon shape | 9.1 | 10.3 | 11.6 | 13.1 | 12.4 |
| Impact strength (kg-cm/cm)<br>(IZOT unnotched) | | | | | |
| Circle | 26.4 | 37.8 | 44.6 | 40.2 | 32.7 |
| Cocoon shape | 26.5 | 40.5 | 48.3 | 49.3 | 45.5 |

Example III

Samples of molded articles were prepared in the same manner as in Example I, except that ABS resin (DENKA ABS GR-2000 manufactured by Denki Kagaku Kogyo Co. Ltd.) was used as a thermoplastic resin and molding temperature of 260°C and mold temperature of 60°C were employed. Mechanical strengths of thus obtained molded articles were measured. For comparison, samples were prepared in the same manner as above, except that chopped strands of glass fibers having circular cross-section (CS-3PE-330, diameter: 13 μ and length: 3 mm) were used and mechanical strengths thereof were also measured. The results are shown in Table 3.

As in clear from Table 3, in this Example, too, when glass fibers of cocoon-shaped cross-section were used, saturation points of mechanical strengths shifted to higher fiber content side as compared with when those of circular cross-section were used and besides, absolute values of the strength were also increased.

6

## Table 3

| | Tensile strength (kg/cm$^2$) | | | | |
|---|---|---|---|---|---|
| Content<br>Cross-<br>section | 20% | 30% | 40% | 50% | 60% |
| Circle | 862 | 884 | 875 | 851 | 763 |
| Cocoon shape | 845 | 933 | 960 | 974 | 882 |
| Flexural strength (kg/cm$^2$) | | | | | |
| Circle | 1227 | 1324 | 1355 | 1342 | 1276 |
| Cocoon shape | 1216 | 1341 | 1395 | 1392 | 1342 |
| Flexural modulus (10$^3$kg/cm$^2$) | | | | | |
| Circle | 55.4 | 80.7 | 102.0 | 110.1 | 107.9 |
| Cocoon shape | 55.0 | 78.4 | 105.8 | 118.8 | 116.3 |
| Impact strength (kg-cm/cm)<br>(IZOT notched) | | | | | |
| Circle | 10.5 | 13.2 | 13.5 | 12.8 | 11.0 |
| Cocoon shape | 11.0 | 13.4 | 14.5 | 16.3 | 15.5 |
| Impact strength (kg-cm/cm)<br>(IZOT unnotched) | | | | | |
| Circle | 41.6 | 52.5 | 69.1 | 60.3 | 46.9 |
| Cocoon shape | 42.4 | 55.9 | 71.2 | 76.4 | 70.7 |

As explained above, the glass-fiber reinforced resin molded articles are improved in various mechanical strengths as compared with those produced using glass fibers of circular cross-section are used as reinforcing materials and furthermore, molded articles of higher strengths can be obtained by increasing the glass fiber content.

**Claims**

1. A glass-fiber reinforced resin molded article which comprises a resin reinforced with glass fibers, characterised in that the resin is a thermoplastic resin and the glass fibers have an oblong cross-section, elliptic cross-section or cocoon-shaped cross-section.

2. A glass-fiber reinforced resin molded article according to claim 1 wherein the glass fibers are in the form of chopped strands.

3. A glass-fiber reinforced resin molded article according to claim 1 wherein the slenderness ratio of the cross-section of the glass fibers is 1.5:1 - 6:1.

4. A glass-fiber reinforced resin molded article according to claim 1 wherein the thermoplastic resin is PP, AS, ABS, PBT, PET, PA, PC, POM, PPO, PPS, PES or PEEK.

5. A glass-fiber reinforced resin molded article according to claim 1 wherein the glass-fiber content of the article is 20-60% by weight of the molded article.

6. A method for producing a glass-fiber reinforced resin molded article which comprises subjecting a mixture of a thermoplastic resin and glass fibers having an oblong cross-section, elliptic cross-section or cocoon-shaped cross-section to extrusion molding or injection molding.

7. A method according to claim 6 wherein the glass fibers are in the form of chopped strands.

**Revendications**

1. Article moulé en résine renforcée de fibres de verre, qui comprend une résine renforcée de fibres de verre,
caractérisé, en ce que la résine est une résine thermoplastique et que les fibres de verre ont une section oblongue, une section elliptique ou une section en forme de cocon.

2. Article moulé en résine renforcée de fibres de verre selon la revendication 1, dans lequel les fibres de verre sont présentées sous la forme de brins découpés.

3. Article moulé en résine renforcée de fibres de verre selon la revendication 1, dans lequel le rapport d'allongement de la section des fibres de verre est de 1,5:1 - 6:1.

4. Article moulé en résine renforcée de fibres de verre selon la revendication 1, dans lequel la résine thermoplastique est PP, AS, ABS, PBT, PET, PA, PC, POM, PPO, PPS, PES ou PEEK.

5. Article moulé en résine renforcée de fibres de verre selon la revendication 1, dans lequel la teneur en fibres de verre de l'article est de 20-60 % en poids de l'article moulé.

6. Procédé pour produire un article moulé en résine renforcée de fibres de verre, qui consiste à soumettre un mélange d'une résine thermoplastique et de fibres de verre ayant une section oblongue, une section elliptique ou une section en forme de cocon à un moulage par extrusion ou à un moulage par injection.

7. Procédé selon la revendication 6, dans lequel les fibres de verre présentent la forme de brins découpés.

**Patentansprüche**

1. Geformter Gegenstand aus glasfaserverstärktem Harz, umfassend ein Harz, das mit Glasfasern verstärkt ist, dadurch **gekennzeichnet,** dass das Harz ein thermoplastisches Harz ist und dass die Glasfasern einen rechteckigen Querschnitt, einen eliptischen Querschnitt oder einen hüllenförmigen Querschnitt aufweisen.

2. Geformter Gegenstand aus glasfaserverstärktem Harz nach Anspruch 1, dadurch **gekennzeichnet,** dass die Glasfasern in der Form von geschnittenen Fäden vorliegen.

3. Geformter Gegenstand aus glasfaserverstärktem Harz nach Anspruch 1, dadurch **gekennzeichnet,** dass der Schlankheitsgrad des Querschnittes der Glasfasern 1,5:1 bis 6:1 ausmacht.

4. Geformter Gegenstand aus glasfaserverstärktem Harz nach Anspruch 1, dadurch **gekennzeichnet,** dass das thermoplastische Harz PP, AS, ABS, PBT, PET, PA, PC, POM, PPO, PPS, PES oder PEEK ist.

5. Geformter Gegenstand aus glasfaserverstärktem Harz nach Anspruch 1, dadurch **gekennzeichnet,** dass der Gehalt an Glasfasern des Gegenstandes 20 bis 60 Gew.% des geformten Gegenstandes ausmacht.

6. Verfahren zur Herstellung eines geformten Gegenstandes aus glasfaserverstärktem Harz, **gekennzeichnet** durch Extrusionsformen oder Spritzformen einer Mischung aus einem thermoplastischen Harz und Glasfasern mit einem rechteckigen Querschnitt, einem eliptischen Querschnitt oder einem hüllenförmigen Querschnitt.

7. Verfahren nach Anspruch 6, dadurch **gekennzeichnet,** dass die Glasfasern in Form von geschnittenen Fäden vorliegen.

# FIG. I

(I-I)                    (I-2)                    (I-3)

# FIG. 2

## (2-I) CIRCULAR CROSS-SECTION

AVERAGE LENGTH (0.47mm)

Vol (%)

FIBER LENGTH (mm)

## (2-2) COCOON-LIKE CROSS-SECTION

AVERAGE LENGTH (0.57mm)

Vol. (%)

FIBER LENGTH (mm)